**Europäisches Patentamt**

**European Patent Office**

**Office européen des brevets**

(19)

(11) Veröffentlichungsnummer : **0 403 813 B1**

(12)

# EUROPÄISCHE PATENTSCHRIFT

(45) Veröffentlichungstag der Patentschrift :
**12.08.92 Patentblatt 92/33**

(51) Int. Cl.⁵ : **B65B 3/32,** G01F 11/06, F04B 13/00

(21) Anmeldenummer : **90109756.8**

(22) Anmeldetag : **22.05.90**

(54) **Verfahren und Vorrichtung zum dosierten Abfüllen von flüssigen und pastösen Produkten, insbesondere Nahrungsmitteln oder dergleichen.**

(30) Priorität : **19.06.89 DE 3919913**

(43) Veröffentlichungstag der Anmeldung :
**27.12.90 Patentblatt 90/52**

(45) Bekanntmachung des Hinweises auf die
Patenterteilung :
**12.08.92 Patentblatt 92/33**

(84) Benannte Vertragsstaaten :
**CH DE DK FR GB LI**

(56) Entgegenhaltungen :
**DE-A- 2 308 689**
**DE-A- 2 900 851**

(73) Patentinhaber : **Benz & Hilgers GmbH**
**Münster Strasse 246**
**W-4000 Düsseldorf 30 (DE)**

(72) Erfinder : **Böhm, Jürgen, Dr.**
**Auf der Wiese 12**
**W-4044 Kaarst (DE)**
Erfinder : **Fischer, Georg**
**Ernst-Moritz-Arndt-Strasse 7**
**W-5620 Velbert 1 (DE)**

(74) Vertreter : **Pfeiffer, Helmut, Dipl.-Ing.**
**Jagenberg AG Patentwesen Kennedydamm**
**15-17 Postfach 1123**
**W-4000 Düsseldorf 30 (DE)**

EP 0 403 813 B1

## Beschreibung

Die Erfindung bezieht sich zunächst auf ein Verfahren zum dosierten Abfüllen von flüssigen und pastösen Produkten, insbesondere Nahrungsmitteln oder dgl., mit einem den Produktzulauf und Produktablauf steuernden, verstellbaren Absperrorgan und einem zwischen einer Ansaugstellung und Ausstoßstellung in einem Dosiergehäuse hin- und herbeweglich gelagerten Dosierkolben, wobei ein auf der Vorderseite des Dosierkolbens liegender Doseurraum während des Ansaugens über das Absperrorgan und ein auf der Rückseite des Dosierkolbens liegender Doseurraum ständig mit dem Produktzulauf in Verbindung steht.

Ein Verfahren der eingangs genannten Art geht aus der deutschen Patentschrift 29 00 851 hervor. Die dort dargestellte Vorrichtung ist zur volumetrischen Dosierung pastöser Stoffe vorgesehen. Die bekannte Vorrichtung arbeitet in der Weise, daß durch den Dosierkolben bei seinem Aufwärtshub die abzufüllende Paste kolbenseitig, d.h. mit seiner größeren Kolbenfläche über den Doseurraum angesaugt wird, der über das Absperrorgan mit dem Produktzulauf verbunden ist. Sobald der Dosierkolben seinen oberen Totpunkt erreicht hat, wird durch das Absperrorgan der Produktzulauf vom vorgenannten Doseurraum getrennt und letzterer durch entsprechende Verstellung des Steuerkolbens des Absperrorgans mit dem Produktablauf verbunden. Bei dem nun folgenden Abwärtsbewegen des Dosierkolbens stößt dieser die abzufüllende Produktmenge über den Produktablauf in den Abfüllbehälter. Sobald der Dosierkolben seine untere Totpunktstellung erreicht hat, wird das Absperrorgan über den damit verbundenen Steuerkolben derart verstellt, daß der Produktablauf vom Doseurraum getrennt wird und letzterer wiederum mit dem Produktzulauf in Verbindung gebracht wird. Daraufhin erfolgt ein erneuter Aufwärtsgang des Dosierkolbens, um wiederum Produkt aus dem Produktzulauf anzusaugen.

Obwohl sich Vorrichtungen der vorgenannten Art bzw. nach dem eingangs erläuterten Verfahren betriebene Doseure an sich in der Praxis gut bewährt haben, gibt es dann Probleme, wenn keimarme Produkte abgefüllt werden sollen. Das ist deshalb der Fall, weil der auf der rückwärtigen Seite des Dosierkolbens liegende Doseurraum ständig mit Produkt gefüllt ist und es hier durchaus zu einer Reinfektion aus dem Produktionsprozeß kommen kann, sofern nicht ein ständiger gesicherter Austausch des Produktes gewährleistet ist. Auch beim Abfüllen von Produkten, die entweder zur Entmischung oder zum Festsetzen in den Zuleitungen neigen, kann es Schwierigkeiten geben, die insbesondere aufgrund der diskontinuierlichen Betriebsweise der bekannten Vorrichtung auftreten, wenn der Dosierkolben während seiner Abwärtsbewegung das Produkt ausstößt.

Der Erfindung liegt die Aufgabe zugrunde, ein zum dosierten Abfüllen von flüssigen und pastösen Produkten, insbesondere Nahrungsmitteln oder dgl. geeignetes Verfahren vorzuschlagen, durch das mit besonders einfachen Mitteln ein gesicherter Austausch des Produktes in allen Doseurräumen gewährleistet ist, so daß kein überaltertes bzw. entmischtes und gegebenenfalls reinfektioniertes Produkt unkontrolliert ausgestoßen wird. Gleichfalls liegt der Erfindung die Aufgabe zugrunde, zur Durchführung des Verfahrens eine geeignete Vorrichtung zu schaffen, die sich durch einen besonders einfachen Aufbau auszeichnet.

Die der Erfindung zugrundeliegende Aufgabe wird in verfahrensmäßiger Hinsicht zunächst dadurch gelöst, daß der Hubbereich bzw. der untere und obere Totpunkt des Dosierkolbens während der Ansaugung des Produktes ohne Veränderung des Dosierhubs verlagert wird. Die der Erfindung zugrundeliegende Idee ist also die, den unteren und oberen Totpunkt während des Ansaugens des Produktes wandern zu lassen, ohne daß der Dosierhub verändert wird. Die Verlagerung des Hubbereiches bzw. des unteren und oberen Totpunktes des Dosierkolbens kann stufenweise bzw. schrittweise oder aber auch stufenlos erfolgen. Das bedeutet, daß je nach abzufüllendem Produkt, insbesondere dessen Viskosität jeweils der untere und obere Totpunkt, ohne daß dabei der Dosierhub verändert wird, in bestimmten Zeitintervallen oder fortlaufend verlagert werden, so daß das Produkt, insbesondere im Hinterkolbenraum ständig in Bewegung ist und ausgetauscht wird. Somit wird kein überaltertes bzw. entmischtes Produkt unkontrolliert ausgestoßen. Auch ist dadurch ein Reinfektion aus dem Produktionsprozeß ausgeschlossen, d.h. es kann keine Vermehrung der Keime des keimarmen Produktes stattfinden.

Eine zum Durchführen des erfindungsgemäßen Verfahrens geeignete Vorrichtung zum dosierten Abfüllen von flüssigen und pastösen Produkten, insbesondere Nahrungsmitteln mit einem den Produktzulauf und Produktablauf steuernden verstellbaren Absperrorgan und einem zwischen einer Ansaugstellung und Ausstoßstellung in einem Dosiergehäuse hin- und herbeweglich gelagerten Dosierkolben zeichnet sich durch eine Verstelleinrichtung zur axialen Verlagerung der unveränderten Hubstrecke des Dosierkolbens während der Ansaugphase des Doseurs aus. An sich ist jede beliebige Antriebs- bzw. Verstelleinrichtung denkbar, die in der Lage ist, jeweils nach gewünschter Zeit oder ständig eine im vorgegebenen Rahmen bestimmte Verlagerung des Hubbereichs des Dosierkolbens vorzunehmen. So eignen sich als Verstellvorrichtung durchaus handelsübliche elektromotorisch angetriebene, zeitgesteuerte Schubspindelantriebe. Der Antrieb für die Verstelleinrichtung kann auch vom Doseurantrieb abgezapft werden oder durch sonstige separate Antriebe, wie z. B. hydraulische und pneumatische Zylinder-Kolben-Einheiten ausgebildet sein. Auch ist es denkbar, die erfindungsgemäße Verstellagerung des Hubbereichs des Dosierkolbens z. B. mittels einer programmierten Speichersteuerung vollautomatisch ablaufen zu lassen.

Ein bevorzugtes Ausführungsbeispiel der Erfindung ist in der Zeichnung dargestellt und wird im folgenden näher erläutert:

Es zeigen in jeweils schematischer Darstellung:

Fig. 1 Die nach der Erfindung ausgebildete Dosiervorrichtung mit der Verstell-Lagerung des Dosierkolbens in einer senkrechten Schnittdarstellung,

Fig. 2 die Dosiervorrichtung zu Beginn des Ansaughubes,

Fig. 3 die Vorrichtung am Ende des Ansaughubes,

Fig. 4 den Beginn des Auspressens,

Fig. 5 das Ende des Auspressens und

Fig. 6 die Dosiervorrichtung in der Reinigungsstellung.

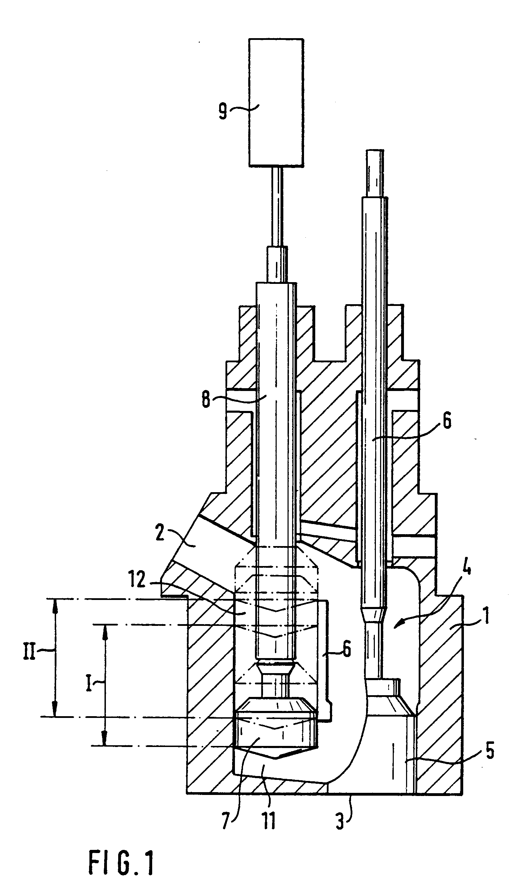

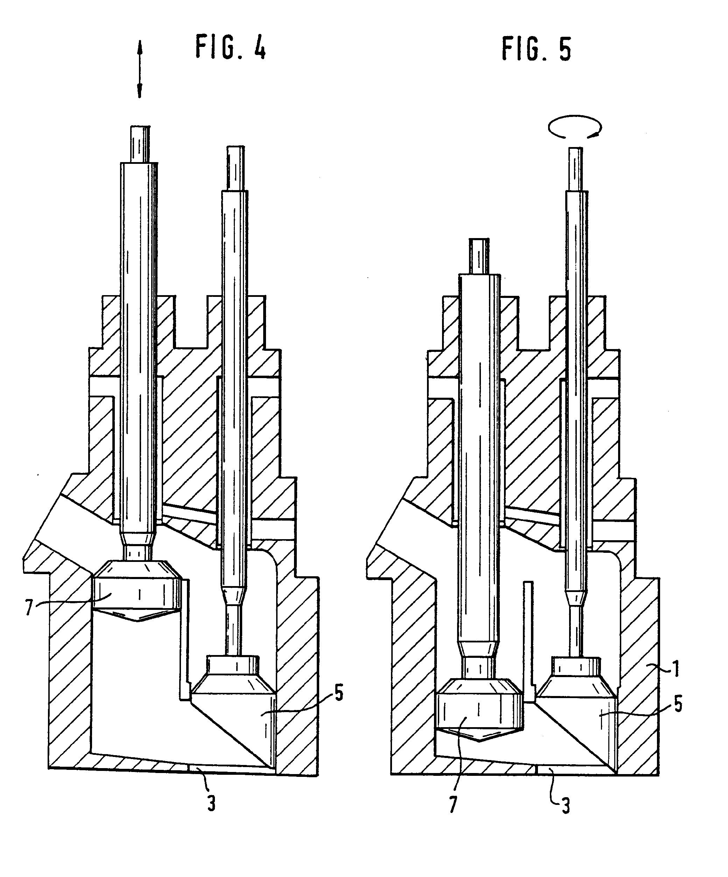

Wie aus Fig. 1 hervorgeht, besitzt die Dosiervorrichtung ein Dosiergehäuse 1 mit einem Produktzulauf 2 und einem Produktablauf 3. Der Produktzulauf 2 und der Produktablauf 3 sind durch ein Absperrorgan 4 gesteuert, welches im dargestellten Ausführungsbeispiel aus einem drehbaren Ventilkörper 5 und einer Ventilstange 6 besteht, die von einem nicht dargestellten Antrieb verdreht werden kann, so daß der Ventilkörper 5 einmal in eine den Produktablauf 3 verschließende Stellung gebracht werden kann, so wie in Fig. 1 dargestellt und zum anderen in eine Offenstellung bewegt werden kann, so wie dies in den Fig. 4 und 5 gezeigt ist.

In einem im wesentlichen parallel zum Absperrorgan verlaufenden Dosierzylinder 6 ist ein Dosierkolben 7 gleitbeweglich gelagert, der über eine Kolbenstange 8 mit einer in Fig. 1 schematisch dargestellten Verstelleinrichtung 9 verbunden ist. Durch den Dosierkolben 7 wird im Dosierzylinder 6 ein vorderer Doseurraum 11 und ein hinterer Doseurraum 12 gebildet. Während der vordere Doseurraum 11 nur bei entsprechender Stellung (Fig. 1) des Ventilkörpers 5 mit dem Produktzulauf verbunden ist steht der hintere Doseurraum 12 mit dem Produktzulauf 2 ständig in Verbindung.

In Fig. 1 ist der Dosierkolben 7 mit ausgezogenen Linien in seiner untersten Stellung gezeigt. Der normale Hubbereich des Dosierkolbens 7 im Dosierzylinder 6 ist mit I bezeichnet, wobei die obere Totpunktlage des Dosierkolbens 7 in strichpunktierten Linien angedeutet ist. Durch die Verstelleinrichtung 9, beispielsweise einen handelsüblichen, elektromotorisch und zeitabhängig gesteuerten Schubspindelantrieb mit Endanschlägen kann der Dosierkolben 7 während der Produktansaugung in seinem gesamten Hubbereich verlagert werden, z. B. in den mit II bezeichneten Hubbereich. Die neuen Totpunktlagen des Dosierkolbens 7 sind mit gestrichelten Linien gezeichnet. Das bedeutet, daß aufgrund einer entsprechenden Steuerung, die auch programmgespeichert sein kann, der Dosierkolben 7 während der Ansaugphase zwischen dem normalen Hubbereich I und dem neuen Hubbereich II entweder stufenweise bzw. schrittweise oder aber auch stufenlos wandern kann, mit der Folge, daß die Doseurräume 11 und 12 mit dem Dosierkolben 7 so beaufschlagt werden, daß das Produkt gut ausgetauscht wird. Hierdurch wird insbesondere im hinteren Doseurraum 12 vermieden, daß überaltertes bzw. entmischtes Produkt entstehen kann.

In konkreter Ausführung der Erfindung kann die Verlagerung des Hubbereichs des Dosierkolbens nach bestimmten Intervallen, z. B. nach jedem dritten Ansaughub durchgeführt werden. Ebenso kann die Verlagerung stetig erfolgen, z. B. in der Weise, daß ausgehend vom normalen unteren Totpunkt der Dosierkolben bis zum neuen oberen Totpunkt verlagert wird. Von dieser Position aus wird dann der Dosierkolben bis zum neuen unteren Totpunkt verstellt. Danach erfolgt eine Ansaugbewegung des Dosierkolbens bis zum alten oberen Totpunkt und schließlich die Ausstoßbewegung bis zum alten unteren Totpunkt. Selbstverständlich kann man bei entsprechender Steuerung den Dosierkolben auch stufenlos zwischen den vorstehend genannten Extremtotpunkten wandern lassen, wobei der Hubbereich jedoch stets gleich bleibt. Unabhängig davon kann natürlich - wie bekannt - der obere Totpunkt verlagert werden, um das Ausstoßvolumen je nach Bedarf zu verändern.

Die Wirkungsweise der Dosiervorrichtung ist wie folgt:

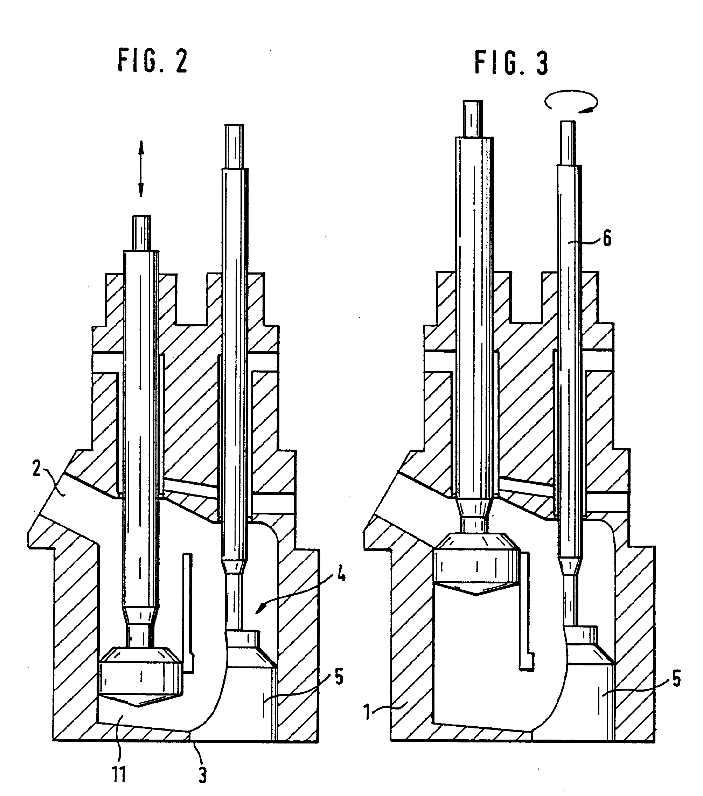

Ausgehend von der in Fig. 1 dargestellten Stellung, d.h. bei Beginn des Ansaugens steht der Dosierkolben 7 in seiner untersten Stellung. Das Absperrorgan 4 ist mit seinem Ventilkörper 5 in einer solchen Stellung, daß der Produktauslauf 3 abgeschlossen ist, hingegen der Produktzulauf 2 über das Absperrorgan 4 mit dem vorderen Doseurraum 11 in Verbindung steht. Der Dosierkolben 7 wird dann, ausgehend von der Fig. 2, in die Stellung nach Fig. 3 bewegt, welche das Ende des Ansaughubes zeigt.

Daraufhin wird der Ventilkörper 5 über die Ventilstange 6 so verdreht, daß durch den Ventilkörper 5 die Verbindung zwischen dem Produktzulauf und dem vorderen Doseurraum 11 abgesperrt wird und gleichzeitig letzterer mit dem Produktablauf 3 in Verbindung gelangt, so wir das in Fig. 4 gezeigt ist. Der Dosierkolben 7 befindet sich nun zu Beginn der Ausstoßstellung. Wie aus Fig. 5 hervorgeht, wird der Dosierkolben 7 nach unten bewegt und dabei das Produkt aus der Auslauföffnung 3 in einen nicht dargestellten Behälter ausgestoßen.

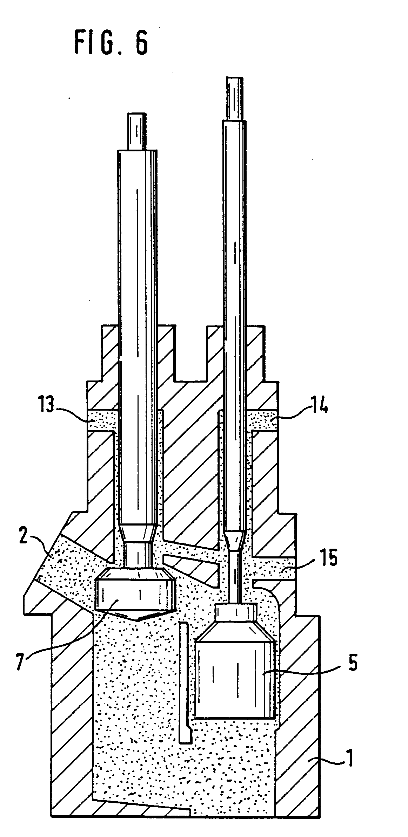

Zu Reinigungszwecken kann die Dosiervorrichtung in die in Fig. 6 gezeigte Reinigungsstellung gebracht werden, in welcher sowohl der Dosierkolben 7 als auch der Ventilkörper 5 nach oben bewegt worden sind. Über den Produktzulauf 2 und zusätzliche Einlauföffnungen 13, 14 und 15 kann Reinigungsflüssigkeit in den Doseur eingebracht werden, so daß alle Teile der Dosiervorrichtung gut umspült werden.

Es versteht sich, daß die Erfindung nicht nur auf das dargestellten Ausführungsbeispiel beschränkt ist, sondern im Rahmen der Ansprüche auch Änderungen zulässig sind. So braucht als Verstelleinrichtung nicht unbedingt ein Schubspindelantrieb vorgesehen sein, sondern die Verstellung bzw. Verlagerung des Hubbereichs des Dosierkolbens kann auch von einer Verstelleinrichtung erzielt werden, deren Antrieb direkt vom Doseurantrieb abgezapft wird oder aber durch sonstige separate Antriebe, wie z. B. hydraulische oder pneumatische Zylinder mit geeigneter Steuerventileinrichtung. Wesentlich ist nur, daß der Hubbereich des Dosierkolbens während des Ansaugens des Produktes in bestimmten Intervallen, z. B. nach jedem fünften Ansaugvorgang oder aber ständig, d.h. bei jedem Ansaughub im Dosierzylinder verlagert wird, so daß ein gesicherter Austausch des Produktes in allen Doseurräumen erreicht wird.

## Patentansprüche

1. Verfahren zum dosierten Abfüllen von flüssigen und pastösen Produkten, insbesondere Nahrungsmitteln oder dgl. mit einem den Produktzulauf und Produktablauf steuernden, verstellbaren Absperrorgan und einem zwischen einer Ansaugstellung und Ausstoßstellung in einem Dosiergehäuse hin- und herbeweglich gelagerten Dosierkolben, wobei ein auf der Vorderseite des Dosierkolbens liegender Doseurraum während des Ansaugens über das Absperrorgan und ein auf der Rückseite des Dosierkolbens liegender Doseurraum ständig mit dem Produktzulauf in Verbindung steht, **dadurch gekennzeichnet**, daß der Hubbereich bzw. der untere und obere Totpunkt des Dosierkolbens während des Ansaugens des Produktes ohne Veränderung des Dosierhubs verlagert wird.

2. Verfahren nach Anspruch 1, **dadurch gekennzeichnet**, daß die Verlagerung des Hubbereichs bzw. des unteren und oberen Totpunktes des Dosierkolbens stufenweise bzw. schrittweise erfolgt.

3. Verfahren nach Anspruch 1, **dadurch gekennzeichnet**, daß die Verlagerung des Hubbereichs stufenlos erfolgt.

4. Verfahren nach einem oder mehreren der Ansprüche 1 bis 3, **dadurch gekennzeichnet**, daß die maximale Verlagerung des Bereichs des Dosierkolbens derart erfolgt, daß der neue obere Totpunkt des durch eine Kolbenstange im Dosiergehäuse geführten Dosierkolbens im wesentlichen im Bereich des freien Endes des rückseitigen Doseurraums liegt.

5. Vorrichtung zum dosierten Abfüllen von flüssigen und pastösen Produkten, insbesondere Nahrungsmitteln oder dgl. mit einem den Produktzulauf und Produktablauf steuernden, verstellbaren Absperrorgan (5) und einem zwischen einer Ansaugstellung und Ausstoßstellung in einem Dosiergehäuse hin- und herbeweglich gelagerten Dosierkolben (7), wobei ein auf der Vorderseite des Dosierkolbens liegender Doseurraum (11) während des Ansaugens über das Absperrorgan (5) und ein auf der Rückseite des Dosierkolbens (7) liegender Doseurraum (12) ständig mit dem Produktzulauf (2) in Verbindung steht zur Durchführung des Verfahrens nach einem oder mehreren der Ansprüche 1 bis 4, **gekennzeichnet durch** eine Verstelleinrichtung (9) zur axialen Verlagerung der unveranderten Hubstrecke des Dosierkolbens (7) während der Ansaugphase der Dosiervorrichtung.

6. Vorrichtung nach Anspruch 5, **dadurch gekennzeichnet**, daß die Verstellvorrichtung (9) von einem elektromotorisch angetriebenen, zeitgesteuerten Schubspindelantrieb gebildet ist.

## Claims

1. Method for the metered packing of liquid and pasty products, particularly foodstuffs or the like, using an adjustable shut-off means controlling the product inlet and the product outlet, and using a metering piston mounted in a metering casing for reciprocating movement between a suction position and an ejection position, a metering chamber situated on the front side of the metering piston being in communication with the product inlet by way of the shut-off means during suction and a metering chamber situated on the rear side of the metering piston being permanently in communication with the product inlet, **characterised in that** the stroke range or the bottom and top dead centre of the metering piston is displaced during the drawing-in of the product without changing the metering stroke.

2. Method according to Claim 1, **characterised in that** the displacement of the stroke range or of the bottom and top dead centres of the metering piston is effected in stages or steps.

3. Method according to Claim 1, **characterised in that** the displacement of the stroke range is effected in a continuously variable manner.

4. Method according to one or more of Claims 1 to 3, **characterised in that** the maximum displacement of the range of the metering piston is effected in such a manner that the new top dead centre of the metering piston guided by a piston rod in the metering casing lies substantially in the region of the free end of the metering chamber on the rear side.

5. Apparatus for the metered packing of liquid and pasty products, particularly foodstuffs or the like, comprising an adjustable shut-off means (5) controlling the product inlet and the product outlet, and comprising a metering piston (7) mounted in a metering casing for reciprocating movement between a suction position and an ejection position, in which apparatus a metering chamber (11) situated on the front side of the metering piston is in communication with the product inlet (2) via the shut-off means (5) during suction and a metering chamber (12) situated on the rear side of the metering piston (7) is permanently in communication with the product inlet (2), for implementing the method according to one or more of Claims 1 to 4, **characterised by** an adjusting device (9) for the axial displacement of the unchanged stroke path of the metering piston (7) during the suction phase of the metering apparatus.

6. Apparatus according to Claim 5, **characterised in that** the adjusting apparatus (9) is in the form of an electric motor driven, time controlled thrust spindle drive.

## Revendications

1. Procédé pour le remplissage dosé de produits liquides et pâteux, en particulier de denrées alimentaires ou analogues, avec un organe de fermeture réglable commandant l'entrée du produit et la sortie du produit et un piston de dosage en mouvement alternatif dans un boîtier de dosage entre une position d'aspiration et une position d'expulsion, dans lequel une chambre doseuse située à l'avant du piston de dosage est en communication par l'organe de fermeture avec l'entrée du produit pendant l'aspiration et une chambre doseuse située à l'arrière du piston de dosage est en permanence en communication avec l'entrée du produit, **caractérisé en ce que** la course respectivement le point mort bas et le point mort haut du piston de dosage est déplacé pendant l'aspiration du produit sans modification de la longueur de la course de dosage.

2. Procédé suivant la revendication 1, **caractérisé en ce que** le déplacement de la course respectivement du point mort bas et du point mort haut du piston de dosage est réalisé par étapes, respectivement pas à pas.

3. Procédé suivant la revendication 1, **caractérisé en ce que** le déplacement de la course est réalisé de manière continue.

4. Procédé suivant l'une ou l'autre des revendications 1 à 3, **caractérisé en ce que** le déplacement maximal de la course du piston de dosage est réalisé de telle façon que le nouveau point mort haut du piston de dosage guidé par une tige de piston dans le boîtier de dosage se trouve essentiellement dans la région de l'extrémité libre de la chambre doseuse arrière.

5. Dispositif de remplissage dosé de produits liquides et pâteux, en particulier de denrées alimentaires ou analogues, avec un organe de fermeture (5) réglable commandant l'entrée du produit et la sortie du produit et un piston de dosage (7) animé d'un mouvement alternatif dans un boîtier de dosage entre une position d'aspiration et une position d'expulsion, dans lequel une chambre doseuse (11) située à l'avant du piston de dosage est en communication avec l'entrée de produit (2) pendant l'aspiration par l'intermédiaire de l'organe de fermeture (5) et une chambre doseuse (12) située à l'arrière du piston de dosage (7) est en permanence en communication avec l'entrée de produit (2), pour la mise en oeuvre du procédé suivant l'une ou l'autre des revendications 1 à 4, **caractérisé par** un dispositif de réglage (9) pour le déplacement axial de la course de longueur inchangée du piston de dosage (7) pendant la phase d'aspiration du dispositif de dosage.

6. Dispositif suivant la revendication 5, **caractérisé en ce que** le dispositif de réglage (9) est constitué par une commande à tige coulissante, temporisée, actionnée par un moteur électrique.

FIG.1

FIG. 2

FIG. 3

# FIG. 4

# FIG. 5

# FIG. 6